# EUROPEAN PATENT APPLICATION

(11) **EP 3 579 297 A1**
(43) Date of publication of application: **11.12.2019**
(21) Application number: 18747214.7
(22) Date of filing: 05.02.2018
(51) Int. Cl.: H01M 2/10, H01M 10/613, H01M 10/647, H01M 10/6554

(54) **CELL PACK**

(30) Priority: 06.02.2017 JP 2017019868
(71) Applicant: Hitachi Automotive Systems, Ltd., Hitachinaka-shi Ibaraki 312-8503 (JP)
(72) Inventor: TAKAHASHI, Yukinori, Hitachinaka-shi Ibaraki 312-8503 (JP); NAKANO, Youichi, Hitachinaka-shi Ibaraki 312-8503 (JP); NAKAJIMA, Takayuki, Hitachinaka-shi Ibaraki 312-8503 (JP); SUEMATSU, Hisayuki, Hitachinaka-shi Ibaraki 312-8503 (JP)
(74) Representative: MERH-IP Matias Erny Reichl Hoffmann Patentanwälte PartG mbB
(86) International application number: PCT/JP2018/003857
(87) International publication number: WO 2018/143463

(57) **Abstract**

A cell pack includes a battery group which includes a plurality of secondary battery cells each having a pair of wide-width surfaces, a pair of narrow-width surfaces, a bottom surface, and an external terminal formed to face the bottom surface; a housing which has one side surface, another side surface adjacent to the one side surface, and a facing side surface facing the other side surface and houses the battery group; and a pack external terminal which is disposed adjacent to the facing side surface of the housing and is connected to the external terminal of the battery group, wherein the secondary battery cells of the battery group are stacked so that the wide-width surfaces face each other, the battery group is housed in the housing in a state in which a wide-width surface of a secondary battery cell of a lowermost layer and the one side surface of the housing are coupled to each other so as to be capable of conducting heat therebetween and the bottom surfaces of the secondary battery cells and the other side surface of the housing are coupled to each other so as to be capable of conducting heat therebetween, and a height of the facing side surface of the housing is lower than that of the other side surface.

## Description

### Technical Field

The present invention relates to a cell pack.

### Background Art

In recent years, a cell pack including a battery group including a plurality of lithium ion secondary batteries is used as a power supply of an electric vehicle, a hybrid electric vehicle, or an electric device.

Since a secondary battery cell generates heat due to a current flowing therein at the time of being charged and internal resistance, many cell packs have a cooling function

As an example of such a conventional cell pack, a structure having a cooling device in which heat distribution pipes having flow paths of a refrigerant are disposed on a bottom surface of a battery group housed in a housing with a heat transfer sheet interposed therebetween and a heat radiation member having heat radiation fins is disposed to be closely adhered to the heat dispersion pipe has been known (see, for example, PTL 1).

### Citation List

### Patent Literature

PTL 1: JP 2012-018915 A

### Summary of Invention

### Technical Problem

Since the cell pack described in PTL 1 has a complicated cooling structure, workability of assembly of the cell pack is poor.

### Solution to Problem

According to an aspect of the invention, a cell pack includes a battery group which includes a plurality of secondary battery cells each having a pair of wide-width surfaces, a pair of narrow-width surfaces, a bottom surface, and an external terminal formed to face the bottom surface; a housing which has one side surface, another side surface adjacent to the one side surface, and a facing side surface facing the other side surface and houses the battery group; and a pack external terminal which is disposed adjacent to the facing side surface of the housing and is connected to the external terminal of the battery group, wherein the secondary battery cells of the battery group are stacked so that the wide-width surfaces face each other, the battery group is housed in the housing in a state in which a wide-width surface of a secondary battery cell of a lowermost layer and the one side surface of the housing are coupled to each other so as to be capable of conducting heat therebetween and the bottom surfaces of the secondary battery cells and the other side surface of the housing are coupled to each other so as to be capable of conducting heat therebetween, and a height of the facing side surface of the housing is lower than that of the other side surface.

### Advantageous Effects of Invention

According to the invention, a structure is simplified, such that workability of assembly can be improved.

### Brief Description of Drawings

[FIG. 1] FIG. 1 is a perspective view showing an appearance of a cell pack according to an embodiment of the invention.
[FIG. 2] FIG. 2 is a perspective view of the cell pack shown in FIG. 1 in a state in which an upper cover of the cell pack is opened.
[FIG. 3] FIG. 3 is a perspective view of a battery module shown in FIG. 2.
[FIG. 4] FIG. 4 is an exploded perspective view of the battery module shown in FIG. 3 in a state in which a bus bar case of the battery module is removed.
[FIG. 5] FIG. 5 is an exploded perspective view of battery groups shown in FIG. 4.
[FIG. 6] FIG. 6 is a perspective view of a contactor module shown in FIG. 2.
[FIG. 7] FIG. 7 is a perspective view of the contactor module shown in FIG. 6 when viewed from a rear side.
[FIG. 8] FIG. 8 is a cross-sectional view taken along line IIX-IIX of the battery module shown in FIG. 2.
[FIG. 9] FIG. 9 is a side view for describing a disposition relationship between the battery groups and a housing.
[FIG. 10] FIG. 10 is a cross-sectional view showing a modified example of a thermal coupling structure between the battery groups and the housing.

### Description of Embodiments

Hereinafter, a cell pack according to an embodiment of the invention will be described with reference to the drawings.

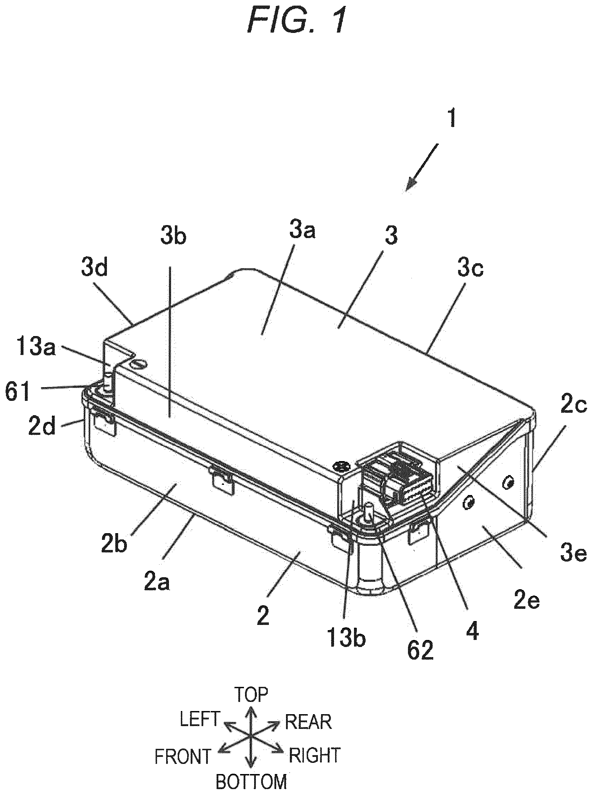

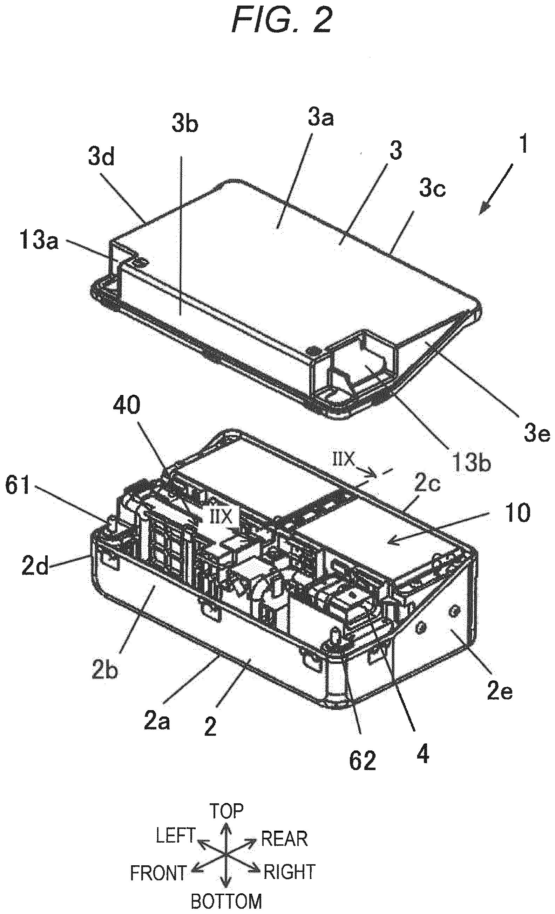

FIG. 1 is a perspective view showing an appearance of a cell pack according to an embodiment of the invention, and FIG. 2 is a perspective view of the cell pack shown in FIG. 1 in a state in which an upper cover of the cell pack is opened.

A cell pack 1 has a housing including a case body 2 and an upper cover 3. The case body 2 and the upper cover 3 are formed of a resin or a metal. The case body 2 has a bottom surface 2a, a front side surface 2b, a rear side surface 2c, a left side surface 2d, and a right side surface 2e, and is formed in a box shape of which an inner portion is a space.

In the following description, a left and right direction, a front and rear direction, and a top and bottom direction are defined as shown.

The front side surface 2b of the case body 2 is formed to be lower than the rear side surface 2c. The left side surface 2d and the right side surface 2e of the case body 2 have flat portions of which upper end surfaces have the same height as that of the front side surface 2b and inclined portions extending from the flat portions to an upper end surface of the front side surface 2b. The upper cover 3 has an upper surface 3a, a front side surface 3b, a rear side surface 3c, a left side surface 3d, and a right side surface 3e. The front side surface 3b of the upper cover 3 is formed to be higher than the rear side surface 3c. The left side surface 3d and the right side surface 3e of the upper cover 3 have flat portions of which lower end surfaces have the same height as that of the front side surface 3b and inclined portions extending from the flat portions to a lower end surface of the rear side surface 3c. The case body 2 and the upper cover 3 are formed so that lengths of the flat portions and lengths and inclination angles of the inclined portions of each of them are substantially the same as each other, and are combined with each other so that a housing 4 has a rectangular parallelepiped shape.

Recesses 13a and 13b are formed in left and right end portion sides of a front surface side of the upper cover 3, respectively. Openings are formed in bottom portions of the recesses 13a and 13b, respectively, a pack negative electrode terminal 61 protrudes outward from the opening of the recess 13a and a pack positive electrode terminal 62 protrudes outward from the opening of the recess 13b. In addition, a signal connector 4 is mounted on a bottom surface of the recess 13b. The pack negative electrode terminal 61 and the pack positive electrode terminal 62 are disposed at a position higher than the front side surface 2b of the case body 2. However, an upper end of each of the pack negative electrode terminal 61 and the pack positive electrode terminal 62 is disposed at a position lower than an upper surface of a battery module 10 to be described below. A wiring member inserted into an opening provided in a side surface of the recess 13b is connected to the signal connector 4 of the case body 2.

The battery module 10 and a contactor module 40 are housed in the case body 2. The battery module 10 is disposed at a position corresponding to the inclined portions of the left side surface 2d and the right side surface 2e of the case body 2, that is, a rear side of the case body 2. The contactor module 40 is disposed at a position corresponding to the flat portions of the left side surface 2d and the right side surface 2e of the case body 2, that is, a front side of the case body 2. In the present embodiment, the battery module 10 will be described as a battery module having prismatic lithium ion secondary battery cells.

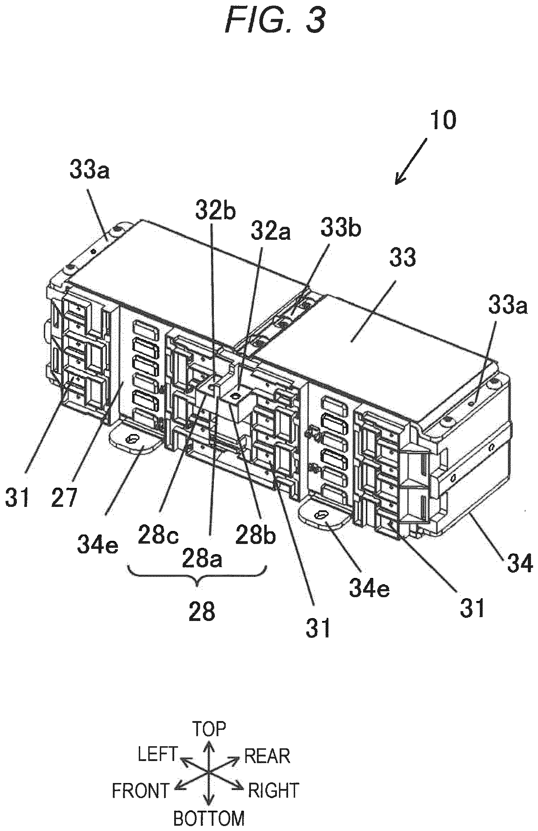

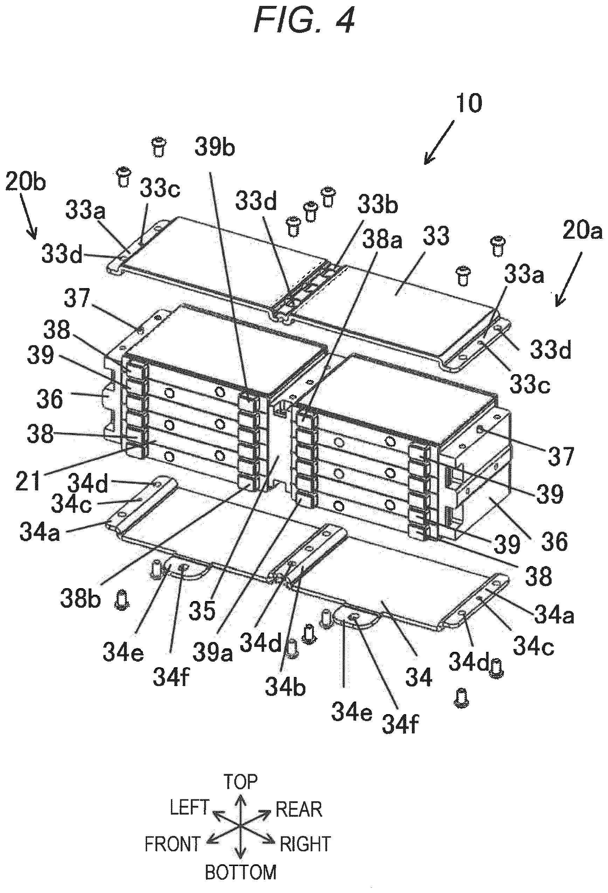

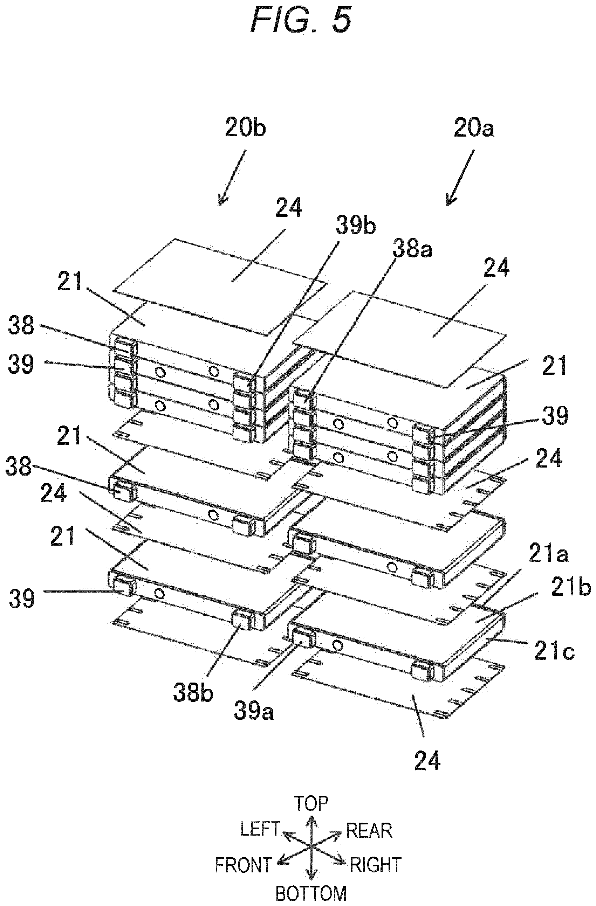

FIG. 3 is a perspective view of a battery module shown in FIG. 2, and FIG. 4 is an exploded perspective view of battery groups shown in FIG. 3. FIG. 5 is an exploded perspective view of the battery groups shown in FIG. 4.

The battery module 10 includes two battery groups 20a and 20b, a bus bar case 27 disposed in front of the battery groups 20a and 20b, a pair of upper and lower end plates 33 and 34, a pair of left and right side plates 36, and a center plate 35. The end plates 33 and 34, the pair of side plates 36, and the center plate 35 are formed of a metal such as aluminum.

As shown in FIG. 5, the respective battery groups 20a and 20b include a plurality of secondary battery cells 21 (six secondary battery cells in the embodiment), and are arranged in parallel on the left and right. The battery group 20a and the battery group 20b have the same structure. The secondary battery cell 21 has a thin rectangular parallelepiped shape, and has a battery container including a battery can having a bottom surface 21a, a pair of wide-width surfaces 21b and a pair of narrow-width surfaces 21c and a battery lid provided to cover an opening (not shown) formed to face the bottom surface 21a of the battery can and sealing the battery can. The respective secondary battery cells 21 are stacked in the top and bottom direction with the wide-width surfaces 21b thereof facing each other. Insulating plates 24 are disposed between secondary battery cells 21 vertically adjacent to each other, above a secondary battery cell 21 of the uppermost layer, and below a secondary battery cell 21 of the lowermost layer. The insulating plate 24 is formed of, for example, polybutylene terephthalate (PBT).

A positive electrode terminal 38 and a negative electrode terminal 39 are mounted on the battery lid of the secondary battery cell 21 in a state in which they are insulated from the battery lid 23. Although not shown, a positive electrode connection portion and a negative electrode connection portion of a power generation element housed in the battery container are connected to the positive electrode terminal 38 and the negative electrode terminal 39, respectively. The respective secondary battery cells 21 are alternately stacked with the other secondary battery cells 21 vertically adjacent thereto with front and back surfaces of the pair of wide-width surfaces 21b inverted so that a positive electrode terminal 38 of one secondary battery cell 21 and a negative electrode terminal 39 of the other secondary battery cell 21 face each other.

The positive electrode terminal 38 of one secondary battery cell 21 and the negative electrode terminal 39 of the other secondary battery cell 21 vertically adjacent to each other are connected to each other by an inter-cell bus bar 31 (see FIG. 3). The positive electrode terminal 38 and the negative electrode terminal 39, and the inter-cell bus bar 31 are joined to each other by, for example, welding. As a result, the plurality of secondary battery cells 21 constituting each of the battery groups 20a and 20b are electrically connected to each other in series.

A positive electrode terminal 38a of the uppermost layer of the battery group 20a is disposed in the vicinity of the left battery group 20b, and becomes the highest potential portion of the battery group 20a. A negative electrode terminal 39a of the lowermost layer of the battery group 20a is disposed in the vicinity of the left battery group 20b, and becomes the lowest potential portion of the battery group 20a. A positive electrode terminal 38b of the lowermost layer of the battery group 20b is disposed in the vicinity of the right battery group 20a, and becomes the highest potential portion of the battery group 20b. The negative electrode terminal 39a of the lowest potential of the battery group 20a and the positive electrode terminal 38b of the highest potential of the battery group 20b are connected to each other by an inter-group bus bar (not shown) . A negative electrode terminal 39b of the uppermost layer of the left battery group 20b is disposed in the vicinity of the battery group 20a, and is the lowest potential portion of the battery group 20b. In this manner, the battery group 20a and the battery group 20b are electrically connected to each other in series, the positive electrode terminal 38a of the uppermost layer of the electrode group 20a is the highest potential portion of the battery group 20a and the battery group 20b, and the negative electrode terminal 39b of the uppermost layer of the battery group 20b becomes the lowest potential portion of the battery group 20a and the battery group 20b.

The battery group 20a and the battery group 20b are disposed on the left and the right of the center plate 35, respectively. The side plates 36 are disposed on a right side surface of the battery group 20a and a left side surface of the battery group 20b, respectively. Pins 37 (see FIG. 4) are provided on upper and lower surfaces of each side plate 36. The end plates 33 and 34 are substantially flat members having sizes enough to cover the entire upper surface or the entire lower surface of the battery groups 20a and 20b, the center plate 35, and the pair of side plates 36, respectively. As shown in FIG. 4, the end plates 33 and 34 are provided with mounting portions 33a and 34a that fix the pair of side plates 36 and mounting portions 33b and 34b that fix the center plate 35, respectively. The mounting portions 33a and 34a are provided with positioning holes 33c and 34c and through-holes 33d and 34d, respectively. The mounting portions 33b and 34b are provided with through-holes 33d and 34d, respectively. In addition, a fixing piece 34e having a mounting hole 34f is formed in the end plate 34.

The battery module 10 is configured in a state in which the secondary battery cells 21 constituting the battery groups 20a and 20b are pushed from left and right directions to the center plate 35 by the pair of side plates 36 and are pressed from top and bottom directions through the insulating plates 24 by the pair of end plates 34 and 36. Hereinafter, a method of configuring the battery module as described above will be described.

The center plate 35, the battery groups 20a and 20b, and the pair of side plates 36 are disposed on the end plate 34, and the battery groups 20a and 20b are pressed from the left and right directions toward the center plate 35 side through the side plates 36. In this case, a heat transfer sheet may be interposed between each of the battery groups 20a and 20b and the center plate 35. In this manner, positions of the pins 37 of the side plates 36 in the left and right directions are made to coincide with the respective positioning holes 34c of the end plate 34. Then, the pins 37 of the respective side plates 36 are inserted into the positioning holes 34c of the end plate 34. In this state, fastening members such as bolts are inserted into the through-holes 34d of the end plate 34 to fix the center plate 35 and the pair of side plates 36 to the end plate 34.

Similarly, the positioning holes 33c of the end plate 33 are aligned with the pins 37 of the respective side plates 36, the pins 37 of the respective side plates 36 are inserted into the positioning holes 33c of the end plate 33, and fastening members such as bolts are inserted into the through-holes 33d of the end plate 33 to fix the end plate 33 to the center plate 35 and the pair of side plates 36.

In this manner, the battery module 10 in which the secondary battery cells 21 constituting the battery groups 20a and 20b are secured in the left and right directions and the top and bottom directions is obtained.

In the abovementioned embodiment, each of the battery groups 20a and 20b is secured by the pair of end plates 33 and 34, and the two battery groups 20a and 20b are secured by the pair of end plates 33 and 34. For this reason, cost reduction can be achieved, and an assembly work is facilitated.

In addition, the battery groups 20a and 20b and the end plates 33 and 34 are aligned with each other only at two places on a left end side and a right end side of the battery groups 20a and 20b, such that positioning accuracy and work efficiency improvement can be achieved. Further, the end plates 33 and 34 are not only fixed to the side plates 36 on the left end side and the right end side of the battery groups 20a and 20b, but are also fixed to the center plate 35 in a central portion. For this reason, warpage of the end plates 33 and 34 can be suppressed. Therefore, thicknesses of the end plates 33 and 34 are reduced, such that cost reduction can be achieved.

As shown in FIG. 3, the bus bar case 27 is disposed on a front surface side of the battery groups 20a and 20b. The bus bar case 27 covers front surfaces of the battery groups 20a and 20b and the inter-cell bus bar 31 in a state in which the front surfaces of the battery groups 20a and 20b and the inter-cell bus bar 31 are partially exposed. A terminal disposition portion 28 is provided on a front surface of the bus bar case 27. A separating wall 28a protruding upward is formed at the center of the terminal disposition portion 28 in the left and right direction. An upper surface of the terminal disposition portion 28 is separated into a positive electrode terminal disposition surface 28b and a negative electrode terminal disposition surface 28c by the separating wall 28a. A distal end portion of a bus bar 32a connected to the positive electrode terminal 38a, which is the highest potential portion of the battery groups 20a and 20b, is disposed on the positive electrode terminal disposition surface 28b. A distal end portion of a bus bar 32b connected to the negative electrode terminal 39b, which is the lowest potential portion of the battery groups 20a and 20b, is disposed on the negative electrode terminal disposition surface 28c.

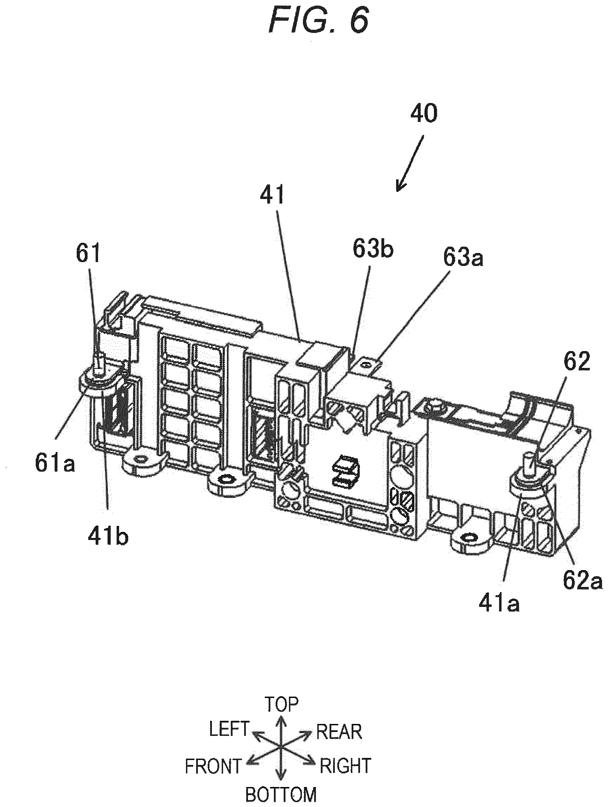

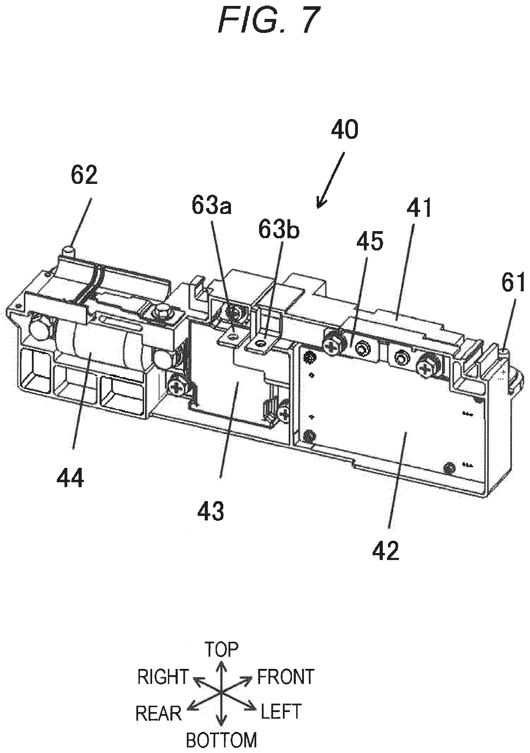

FIG. 6 is a perspective view of a contactor module shown in FIG. 2, and FIG. 7 is a perspective view of the contactor module shown in FIG. 6 when viewed from a rear side.

The contactor module 40 includes a holder 41 and electrical components such as a board 42, a relay (contactor) 43, a fuse 44, and a shunt resistor 45 accommodated in the holder 41. A positive electrode terminal fixing portion 41a and a negative electrode terminal fixing portion 41b that protrude forward are formed in the holder 41. The pack positive electrode terminal 62 is fixed on the positive electrode terminal fixing portion 41a, and the pack negative electrode terminal 61 is fixed on the negative electrode terminal fixing portion 41b. The shunt resistor 45 is mounted on the board 42 by fastening members such as screws. The shunt resistor 45 limits a current at the time of applying a power to prevent occurrence of abnormality. One end of the shunt resistor 45 is connected to the pack negative electrode terminal 61 through a bus bar 61a for connection.

The board 42 is mounted on the holder 41 by fastening members such as bolts on a side facing the battery module 10, in other words, on a rear surface side of the holder 41. The inter-cell bus bar 31 is connected to the board 42 to measure and monitor voltages of the respective secondary battery cells 21, and circuits that constitute a battery management system (BMS) that monitors and controls the entire cell pack 1 is mounted on the board 42.

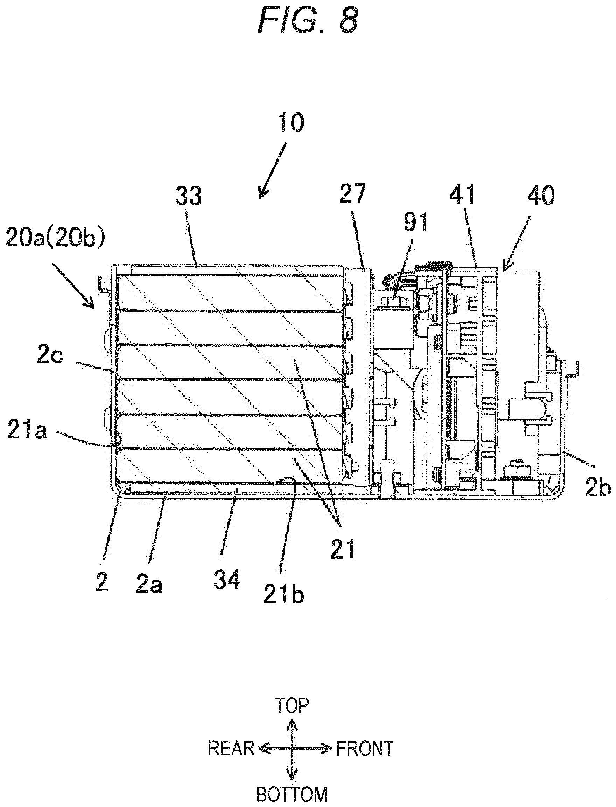

The relay 43 and the fuse 44 are mounted on the holder 41 by fastening members such as screws. One end of the relay 43 and one end of the fuse 44 are connected to each other by a bus bar. The other end of the fuse 44 is connected to the pack positive electrode terminal 62 through a bus bar 62a for connection. The other end of the relay 43 is connected to a bus bar 63a for connection. The bus bar 63a for connection is connected to the bus bar 32a (see FIG. 3) mounted on the bus bar case 27 of the battery module 10. The bus bar 63a for connection and the bus bar 32a are connected to each other by inserting a fastening member such as a bolt 91 (see FIG. 8) into through-holes provided in the bus bar 63a for connection and the bus bar 32a to fix the bus bar 63a for connection and the bus bar 32a to each other. In this manner, voltage paths between the pack positive electrode terminal 62 and positive electrode sides of the battery groups 20a and 20b are formed. It should be noted that the relay 43 and the fuse 44 are electrical components for a safety device for ensuring safety at the time of maintenance and inspection.

The other end of the shunt resistor 45 is connected to the bus bar 32b (see FIG. 3) mounted on the bus bar case 27 of the battery module 10 through a bus bar 63b for connection. The bus bar 63b for connection and the bus bar 32b are connected to each other by inserting a fastening member such as a bolt 91 (see FIG. 8) into through-holes provided in the bus bar 63b for connection and the bus bar 32b to fix the bus bar 63b for connection and the bus bar 32b to each other. In this manner, voltage paths between the pack negative electrode terminal 61 and negative electrode sides of the battery groups 20a and 20b are formed.

That is, the pack positive electrode terminal 62 is connected to the highest potential portion of the battery groups 20a and 20b fixed to the battery module 10 through the electrical components mounted in the contactor module 40, and the pack negative electrode terminal 61 is connected to the lowest potential portion of the battery groups 20a and 20b fixed to the battery module 10 through the electrical components mounted in the contactor module 40.

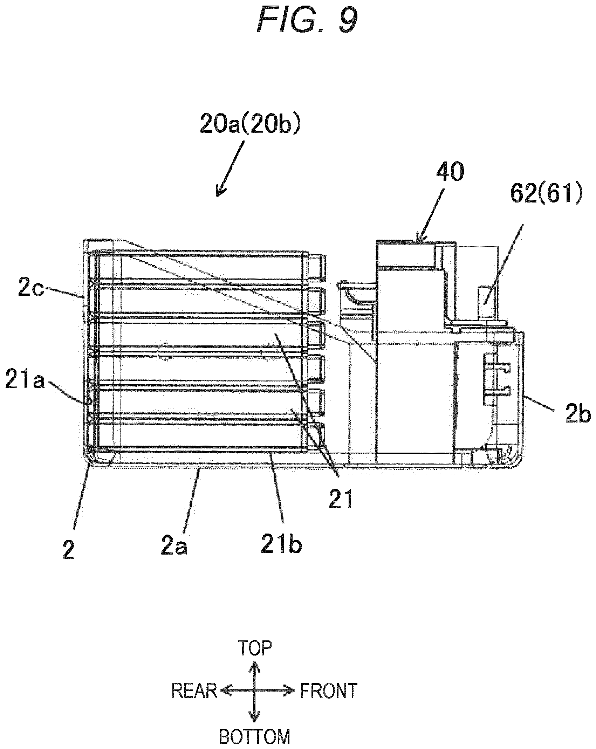

FIG. 8 is a cross-sectional view taken along line IIX-IIX of the battery module shown in FIG. 2, and FIG. 9 is a side view for describing a disposition relationship between the battery group and the housing. In FIG. 9, a perspective view of an internal structure of the case body 2 is shown in order to make the understanding of the structure easy.

The battery module 10 is fixed to an inner surface of the bottom surface 2a (one side surface) of the case body 2 by inserting a mounting member such as a bolt into the mounting hole 34f of the fixing piece 34e of the end plate 34 shown in FIG. 3. For this reason, the end plate 34 of the battery module 10 is in contact with the bottom surface 2a of the case body 2. The battery module 10 is fixed to the case body 2 in a state in which the bottom surfaces 21a of the respective secondary battery cells 21 of the battery groups 20a and 20b are in contact with the inner surface of the rear side surface 2c of the case body. A height (length in the top and bottom direction) of the rear side surface 2c of the case body 2 is higher than that of the battery groups 20a and 20b. Therefore, the bottom surfaces 21a of all of the secondary battery cells 21 of the battery groups 20a and 20b are in contact with the rear side surface 2c of the case body 2. That is, the battery module 10 is coupled to the bottom surface 2a and the rear side surface 2c of the case body 2 so as to be capable of conducting heat to the bottom surface 2a and the rear side surface 2c of the case body 2.

Therefore, heat generated in each of the secondary battery cells 21 constituting the battery groups 20a and 20b is conducted to the bottom surface 2a and the rear side surface 2c of the case body 2, such that each of the secondary battery cells 21 is cooled by the case body 2. Each of the secondary battery cells 21 of the battery groups 20a and 20b is conducted to the bottom surface 2a of the case body 2 through the center plate 35.

As shown in FIG. 9, a height (length in the top and bottom direction) of the front side surface 2b of the case body 2 is lower than that of the battery groups 20a and 20b. The pack positive electrode terminal 62 and the pack negative electrode terminal 61 fixed to the holder 41 of the contactor module 40 are disposed at positions higher than the upper surface of the front side surface 2b of the case body 2. For this reason, it is possible to easily and efficiently perform a work of accommodating the battery module 10 and the contactor module 40 in the case body 2. In addition, it is possible to easily and efficiently assemble the pack positive electrode terminal 62, the bus bar 62a for connection, the pack negative electrode terminal 61, and the bus bar 61a for connection to the holder 41.

The upper end of each of the pack positive electrode terminal 62 and the pack negative electrode terminal 61 is disposed at a position higher than an upper end of the front side surface 2b of the case body 2. For this reason, it is possible to easily perform a work of connecting high voltage (HV) cables to the pack positive electrode terminal 62 and the pack negative electrode terminal 61.

The respective secondary battery cells 21 of the battery module 10 are disposed so that the positive and negative electrode terminals 38 and 39 are directed toward the inside of the case body 2, that is, toward the contactor module 40. The bus bars 32a and 32b of the battery module 10 and the bus bars 63a and 63b for connection of the contactor module 40 are connected to each other, respectively. In addition, the pack negative electrode terminal 61, the pack positive electrode terminal 62, and the bus bars 61a, 62a, 63a, and 63b for connection are disposed at substantially the same height. For this reason, it is possible to reduce lengths of the bus bars 61a, 62a, 63a, and 63b for connection, and it is thus possible to suppress a voltage drop at the time of performing charging or discharging.

The upper ends of the pack positive electrode terminal 62 and the pack negative electrode terminal 61 are disposed at the position lower than the upper surface of the battery module 10. When the pack positive electrode terminal 62 and the pack negative electrode terminal 61 are disposed adjacent to the rear side surface 2c of the case body 2 on which the battery module 10 is disposed, the pack positive electrode terminal 62 and the pack negative electrode terminal 61 have a structure in which they protrude upward of the battery module 10. In the present embodiment, the pack positive electrode terminal 62 and the pack negative electrode terminal 61 are disposed adjacent to the front side surface 2b opposite to the rear side surface 2c of the case body 2 on which the battery module 10 is disposed, and it is thus possible to dispose the upper ends of the pack positive electrode terminal 62 and the pack negative electrode terminal 61 at the position lower than the upper surface of the battery module 10. As a result, it is possible to lower a height of the cell pack 1.

### (Modified Example)

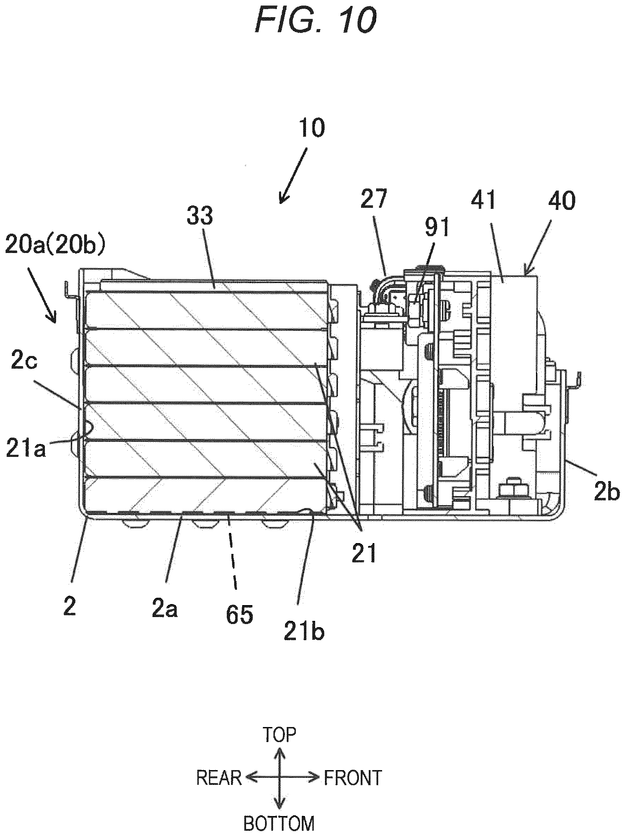

FIG. 10 is a cross-sectional view showing a modified example of a thermal coupling structure between the battery groups and the housing, and corresponds to FIG. 8.

In the abovementioned embodiment, the respective battery groups 20a and 20b of the battery module 10 have a structure in which they are in contact with the bottom surface 2a of the case body 2 through the end plate 34. On the other hand, in the modified example shown in FIG. 10, the respective electrode groups 20a and 20b are in direct contact with the bottom surface 2a of the case body 2.

In a structure shown in the modified example, the end plate is not disposed below the battery groups 20a and 20b, and only the end plate 33 is disposed above the battery groups 20a and 20b. The end plate 33 is fixed to a boss (not shown) provided on the case body 2 by a fastening member, and secures the battery groups 20a and 20b to the bottom surface 2a of the case body 2. As a result, the battery groups 20a and 20b are coupled to the bottom surface 2a of the case body 2 so as to be capable of conducting the heat to the bottom surface 2a of the case body 2.

Other configurations in the modified example are the same as those in the abovementioned embodiment, and the same members will be denoted by the same reference numerals and a description thereof will be omitted.

In the structure shown in FIG. 10, a heat radiation sheet 65 (denoted by dotted lines) may be interposed between the secondary battery cells 21 of the lowermost layers of the battery groups 20a and 20b and the bottom surface 2a of the case body 2. In addition, in the structure shown in FIG. 8, it is also possible to interpose a heat radiation sheet 65 between the end plate 34 and the bottom surface 2a of the case body 2.

Further, in the structure shown in FIG. 10, it is also possible to interpose a plate-shaped member such as the end plate 34 between the secondary battery cells 21 of the lowermost layers of the battery groups 20a and 20b and the bottom surface 2a of the case body 2. In other words, the plate-shaped member disposed between the secondary battery cells 21 of the lowermost layers of the battery groups 20a and 20b and the bottom surface 2a of the case body 2 is limited to a member that has a function of securing the battery groups 20a and 20b, and may be a member that does not have a function of securing the battery groups 20a and 20b.

The cell pack 1 can be installed in a state in which the bottom surface 2a of the case body 2 has a horizontal attitude, but can be also installed in a state in which the bottom surface 2a of the case body 2 has a vertical attitude.

According to the embodiment of the invention, the following effects are obtained.
(1) The battery groups 20a and 20b are configured by stacking a plurality of secondary battery cells 21 so that the wide-width surfaces 21b face each other, and have a structure in which they are housed in the housing in a state in which the wide-width surface 21b of the secondary battery cell 21 of the lowermost layer and one side surface (bottom surface 2a) of the housing are coupled to each other so as to be capable of conducting heat therebetween and the bottom surfaces 21a of the secondary battery cells 21 and the other side surface (rear side surface 2c) of the housing are coupled to each other so as to be capable of conducting heat therebetween. For this reason, the heat generated in the secondary battery cells 21 is conducted to the bottom surface 2a and the rear side surface 2c of the case body 2, such that the secondary battery cells 21 are cooled by the case body 2. As described above, since the cell pack 1 according to the present embodiment has a simple structure that does not have a cooling device having a flow path of a refrigerant for cooling the secondary battery groups 20a and 20b, workability of assembly of the cell pack can be improved. In addition, the height of a facing side surface (front side surface 2b) of the housing is lower than that of the other side surface (rear side surface 2c). For this reason, it is possible to mount the battery module 10 or the contactor module 40 in the housing in a state of gripping the battery module 10 or the contactor module 40 up to a deep position in the housing, such that it is possible to improve workability.
(2) The upper ends of pack external terminals (the pack positive electrode terminal 62 and the pack negative electrode terminal 61) are disposed at the position higher than the upper end of the facing side surface (front side surface 2b) of the housing. For this reason, it is possible to easily perform the work of connecting the HV cables to the pack external terminals.
(3) The bottom surfaces 21a of all the secondary battery cells 21 of the battery groups 20a and 20b are coupled to the other side surface (rear side surface 2c) of the housing so as to be capable of conducting the heat to the other side surface (rear side surface 2c) of the housing. For this reason, it is possible to improve cooling performance of the housing cooling the respective secondary battery cells 21.
(4) The wide-width surfaces 21b of the secondary battery cells 21 of the lowermost layers of the battery groups 20a and 20b and one side surface (bottom surface 2a) of the housing are coupled to each other through the plate-shaped member (end plate 34) so as to be capable of conducting the heat therebetween. For this reason, it is also possible to adopt a structure in which the plate-shaped structure is used for both of a securing member securing the battery groups 20a and 20b and a fixing member fixing the battery groups 20a and 20b to one side surface of the housing by the securing member, such that it is easy to mount the electrode groups 20a and 20b in the housing.
(5) The wide-width surfaces 21b of the secondary battery cells 21 of the lowermost layers of the battery groups 20a and 20b and one side surface of the housing can have a structure in which they are coupled to each other through the heat radiation sheet so as to be capable of conducting the heat therebetween. In this structure, the structure is further simplified, such that cost reduction can be achieved.

In the abovementioned embodiment, the structure in which the two battery groups 20a and 20b are accommodated in the housing has been described by way of example. However, the number of battery groups accommodated in the housing can be one or three or more. In addition, although a case where the number of secondary battery cells 21 of each battery group 20a and 20b is six has been described by way of example, the number of secondary battery cells 21 of each battery group 20a and 20b is not limited thereto, and can be arbitrarily increased or decreased.

In the abovementioned embodiment, a structure in which the inclined portions inclined in a straight line shape are formed on the left side surface 2e and the right side surface 2f of the case body 2 has been described by way of example. However, the inclined portions may not have the straight line shape, but can have a curved shape, or portions having a stepped shape can be provided instead of the inclined portions.

In the abovementioned embodiment, the cell pack having the lithium ion secondary battery cells has been described by way of example. However, the invention can be applied to a cell pack having secondary battery cells other than the lithium ion secondary battery cells, such as nickel hydrogen battery cells, lead battery cells, or nickel cadmium battery cells. In addition, the invention can also be applied to a cell pack having power storage elements such as lithium ion capacitors.

In the abovementioned embodiment, a structure in which the contactor module 40 includes the electrical components such as the board 42, the relay 43, the fuse 44, and the shunt resistor 45 has been described by way of example. However, a type or the number of electrical components included in the contactor module 40 may be increased or decreased as compared with that described above.

Various embodiments and modified examples have been described hereinabove, but the invention is not limited to these contents. Other aspects considered to be within the technical idea of the invention are also included in the scope of the invention.

The disclosure contents of the following priority application are incorporated herein by reference.

Japanese Patent Application No. 2017-019868 (filed on Feb 6, 2017)

### Reference Signs List

- 1: cell pack
- 2: case body
- 2a: bottom surface (one side surface)
- 2b: front side surface (facing side surface)
- 2c: rear side surface (the other side surface)
- 10: battery module
- 20a, 20b: battery group
- 21: secondary battery cell
- 21a: bottom surface
- 21b: wide-width surface
- 21c: narrow-width surface
- 34: end plate (plate-shaped member)
- 38, 38a, 38b: positive electrode terminal (external terminal)
- 39, 39a, 39b: negative electrode terminal (external terminal)
- 61: pack negative electrode terminal (pack external terminal)
- 62: pack negative electrode terminal (pack external terminal)
- 65: heat radiation sheet

## Claims

1. A cell pack comprising:
a battery group which includes a plurality of secondary battery cells each having a pair of wide-width surfaces, a pair of narrow-width surfaces, a bottom surface, and an external terminal formed to face the bottom surface;
a housing which has one side surface, another side surface adjacent to the one side surface, and a facing side surface facing the other side surface and houses the battery group; and
a pack external terminal which is disposed adjacent to the facing side surface of the housing and is connected to the external terminal of the battery group,
wherein the secondary battery cells of the battery group are stacked so that the wide-width surfaces face each other,
the battery group is housed in the housing in a state in which a wide-width surface of a secondary battery cell of a lowermost layer and the one side surface of the housing are coupled to each other so as to be capable of conducting heat between the wide-width surface and the one side surface and the bottom surfaces of the secondary battery cells and the other side surface of the housing are coupled to each other so as to be capable of conducting heat between the bottom surfaces and the other side surface, and
a height of the facing side surface of the housing is lower than that of the other side surface.

2. The cell pack according to claim 1, wherein
an upper end of the pack external terminal is disposed at a position higher than an upper end of the facing side surface of the housing.

3. The cell pack according to claim 1, wherein
the bottom surfaces of all the secondary battery cells of the battery group are coupled to the other side surface of the housing so as to be capable of conducting heat to the other side surface of the housing.

4. The cell pack according to claim 1, wherein
the wide-width surface of the secondary battery cell of the lowermost layer of the battery group and the one side surface of the housing are coupled to each other with a plate-shaped member interposed between the wide-width surface and the one side surface so as to be capable of conducting the heat between the wide-width surface and the one side surface.

5. The cell pack according to claim 1, wherein
the wide-width surface of the secondary battery cell of the lowermost layer of the battery group and the one side surface of the housing are coupled to each other with a heat radiation sheet interposed between the wide-width surface and the one side surface so as to be capable of conducting the heat between the wide-width surface and the one side surface.
